# EUROPÄISCHE PATENTSCHRIFT

(11) **EP 1 731 014 B1**
(45) Veröffentlichungstag und Bekanntmachung des Hinweises auf die Patenterteilung: **02.06.2010**
(21) Anmeldenummer: 06011823.9
(22) Anmeldetag: 08.06.2006
(51) Int. Cl.: A01D 34/04, A01B 45/02, E01C 19/23

(54) **Fahrzeug**
Vehicle
Véhicule

(30) Priorität: 09.06.2005 DE 102005026754
(43) Veröffentlichungstag der Anmeldung: 13.12.2006
(73) Patentinhaber: Brielmaier, Martin, 88048 Friedrichshafen (DE)
(72) Erfinder: Brielmaier, Martin, 88048 Friedrichshafen (DE)
(74) Vertreter: Weiss, Peter

(56) Entgegenhaltungen:
- EP-A- 1 160 380
- WO-A-02/42564
- DE-A1- 1 634 686
- DE-A1- 19 719 142
- DE-U1- 29 508 564
- US-A- 4 523 873
- US-A- 5 382 084

## Beschreibung

Die Erfindung betrifft ein Fahrzeug mit einem Antrieb für zumindest eine Fahrwalze mit einem Walzenmantel, auf dessen Oberfläche sich Vorsprünge befinden, wobei der Antrieb in der Fahrwalze angeordnet ist.

### STAND DER TECHNIK

Insbesondere im landwirtschaftlichen Bereich gibt es eine Vielzahl von Fahrzeugen, die erheblichen Anforderungen ausgesetzt sind. Diese Fahrzeuge werden oft in schwierigem Gelände eingesetzt, beispielsweise werden mit ihnen extremste Steilhänge bearbeitet.

Zu erwähnen sind vor allem handgeführte Einachser, wie beispielsweise Motormäher, Kreiselheuer, Bandrechen aber auch ausserhalb des landwirtschaftlichen Bereichs, beispielsweise Kehrmaschinen und Schneeräumer.

Für derartige Fahrzeuge werden vor allem Räder mit einer Gummibereifung angeboten, wobei die Verwendung derartiger Mäher beispielsweise im steilen Gelände seine Grenzen hat. Hier werden anstelle der Gummiräder, beispielsweise Stahl-Gitterräder oder sogenannte Stachelwalzen eingesetzt, wobei beispielsweise anstelle der Gummiräder seitlich an die Achse eines Motormähers jeweils eine Stachelwalze montiert wird. Die Stacheln dieser Stachelwalzen graben sich in den Boden ein, wodurch extremste Steilhänge bearbeitet werden können. Durch die vielen Auflagepunkte bieten die Stachelwalzen sehr guten Halt und verhindern dadurch ein Aufreissen und Einschneiden der Grasnabe.

Ein wesentliches Augenmerk ist bei derartigen Fahrzeugen auf den Schwerpunkt gerichtet. Bei den bekannten Fahrzeugen liegen die Antriebsaggregate in der Regel so hoch, dass das Fahrzeug leicht umkippt. Je schräger die Maschine gestellt wird und je höher die Aggregate liegen, desto eher kippt sie um. Andererseits kann das Fahrzeug tiefer gelegt werden, wodurch jedoch die Bodenfreiheit beeinträchtigt wird, die insbesondere bei unebenem Gelände bzw. Gelände mit Bodenwuchs zu beachten ist.

Verbesserung dahingehend werden bspw. in der US 5 382 084 A1 beschrieben. Hier wird eine axial drehbare, einen Boden bearbeitende Fahrwalze beschrieben, welche an einem Fahrzeug befestigbar ist. Die Fahrwalze wird durch zwei Hydraulikmotoren angetrieben, welche in der Fahrwalze parallel zu einer Rotationsachse zwischen den seitlichen Ende der Fahrwalze angeordnet sind.

Darüber hinaus wird in der WO 02/42564 A1 eine Vorrichtung zum Bearbeiten von Natursteinpflasterungen beschrieben, bei welcher in einer Walze eine Vibrationseinrichtung, vorzugsweise bestehend aus einem Elektromotor, vorgesehen ist. Darüber hinaus kann die Vorrichtung neben der Vibrationseinrichtung bspw. einen weiteren Motor als Antrieb der Vorrichtung aufweisen, welcher auf die Walze einwirkt.

Auch die EP 1 160 380 A2 beschreibt ein Fahrzeug mit ein paar Fahrwalzen, bei welchem die Antriebsmotoren zum Drehen der Fahrwalzen in den Fahrwalzen angeordnet sind.

### AUFGABE DER ERFINDUNG

Der vorliegenden Erfindung liegt die Aufgabe zugrunde, ein Fahrzeug der o.g. Art zu schaffen, welches vielfältiger einsetzbar ist und wenig zum Umkippen neigt. Ferner sollen Lärm- und Abgasemissionen reduziert und die Schnittbreite erhöht werden.

### LÖSUNG DER AUFGABE

Zur Lösung der Aufgabe führt, dass ein Zusatzantrieb für eine an das Fahrzeug angebaute Arbeitsgerätschaft in der Fahrwalze angeordnet ist.

Dieses Merkmal gilt also für den direkten Antrieb der Fahrwalze selbst, der beispielsweise aus einem Radnabenmotor bestehen kann, wie auch für den Zusatzantrieb. Der Radnabenmotor könnte beispielsweise elektrisch betrieben werden, bevorzugt wird jedoch ein hydraulischer Antrieb über Hydropumpen. In diesem Fall sitzt das entsprechende Hydraulikaggregat vorzugsweise ebenfalls in der Fahrwalze. Hinsichtlich des Zusatzantriebes bietet es sich an, diesen mit dem Hydroantrieb für die Radnabenmotoren zu koppeln, so dass das Hydroaggregat beispielsweise drei Hydropumpen bedient. Eine Hydropumpe ist für die Arbeitsgerätschaft gedacht. Die beiden anderen Hydropumpen jeweils für einen Radnabenmotor.

Das Hydroaggregat wird bevorzugt von einem Motor angetrieben. Hier bietet sich ein kraftstoffgespeister Motor an, beispielsweise ein Vier-Takt-Benzinmotor. Jedoch sind auch andere Möglichkeiten denkbar, wie beispielsweise entsprechende Elektromotoren.

Wird ein kraftstoffbetriebener Benzinmotor vorgesehen, so sollten die Fahrwalzen entsprechende Luftöffnungen zum Ansaugen von Luft aufweisen. Abgase dieses Motors werden über einen Auspuff und ein Auspuffrohr nach aussen geführt, wobei das Auspuffrohr nach unten gerichtet ist, so dass die Bedienperson keinen Abgasen ausgesetzt ist.

Bevorzugt werden sämtliche oder zumindest der grösste Teil der Antriebselemente unterhalb der Achse oder um die Achse herum angeordnet, so dass der Schwerpunkt möglichst tief gehalten wird. Durch die Anordnung der Antriebsaggregate in der Fahrwalze wird gewährleistet, dass eine Lärmemission auf ein Minimum reduziert ist. Es handelt sich beinahe um eine Flüstermaschine.

In einem bevorzugten Ausführungsbeispiel sollen auf einer Achse beidseitig Naben aufgesetzt und auf jede Nabe eine Fahrwalze aufgeschoben sein.

Hierdurch ist es möglich, beispielsweise einen Balkenmäher herzustellen, der eine Schnittbreite von über 4 m, sogar bis 6 m hat.

Dabei soll jeder Nabe ein eigener ansteuerbarer Antrieb zugeordnet sein, d.h., jede einzelne Fahrwalze kann separat beschleunigt oder abgebremst werden.
Dies kann durch entsprechende Stufenschaltung oder aber durch eine kontinuierliche Geschwindigkeitsregelung geschehen.

Jede Fahrwalze weist gegenüber der Nabe eine Öffnung auf, wobei die Öffnungen der beiden Fahrwalzen sich gegenüberliegen. In der Öffnung der Fahrwalze sitzt ein Stützring, der sich und damit auch die Fahrwalze gegenüber der Achse abstützt. Damit die Fahrwalze um den Stützring herumlaufen kann, ragen aus dem Stützring Rollenlager, auf denen sich die Innenfläche der Fahrwalze abrollt. Selbstverständlich sind hier auch alle anderen Lager möglich und sollten vom Erfindungsgedanken umfasst sein.

Die beiden Fahrwalzen halten einen Abstand voneinander ein, wobei in diesem Abstand bevorzugt der o.g. Auspuff sitzt, dessen Auspuffrohr nach unten ausgerichtet ist.

Aus dem Abstand bzw. Spalt zwischen den beiden Fahrwalzen ragt dann auch ein Arm heraus, an dem sich ein Flansch zum Festlegen der oben erwähnten Arbeitsgerätschaft befindet. Ebenso kann aus diesem Abstand eine mit der Achse verbundene Führungseinrichtung herausragen, wobei es auch im Rahmen der Erfindung liegt, dass das ganze Fahrzeug ferngesteuert, beispielsweise über GPS gelenkt wird. Hierzu könnte auf dem Fahrzeug eine Kamera montiert sein, ferner eine Sende-/Empfangseinrichtung, welche die notwendigen Fahrdaten an eine Zentrale übermittelt. Von dieser Zentrale aus wird dann das Fahrzeug ferngesteuert.

Das Fahrzeug ist als Einachser oder auch als Mehrachser denkbar. Insbesondere könnte es als Zweiachser auch als Pritschenwagen ausgestaltet sein, z.B. im Obstbau. In diesem Fall werden den beiden Fahrwalzen zwei weitere Räder an einer zweiten Achse zugeordnet, wobei diese Räder wiederum selbständig drehbar sind. In einem einfachen Ausführungsbeispiel geschieht dies um eine Vertikalachse mit einer beliebigen Getriebeeinheit, die bewirkt, dass die Räder um diese Vertikalachse drehen. Auch hier sind viele Möglichkeiten denkbar.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht eines erfindungsgemässen Fahrzeuges;
Figur 2 einen Längsschnitt durch das Fahrzeug gemäss Figur 1;
Figur 3 eine Draufsicht auf ein weiteres Ausführungsbeispiel eines erfindungsgemässen Fahrzeuges.

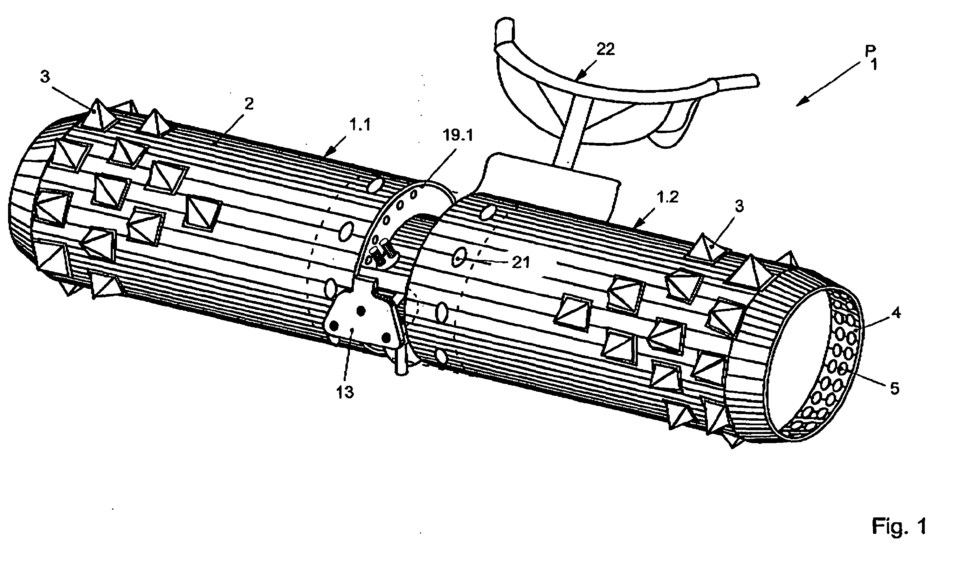

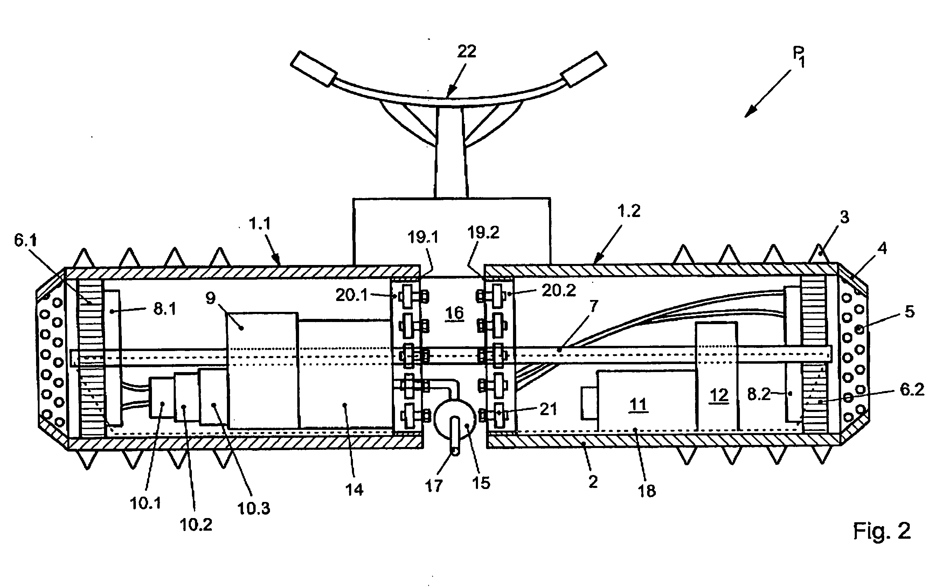

Gemäss den Figuren 1 und 2 weist ein erfindungsgemässes Fahrzeug P₁ zwei Fahrwalzen 1.1 und 1.2 auf, deren Walzenmantel 2 jeweils von stachelartigen Vorsprüngen 3 besetzt ist. An den Walzenmantel 2, der hülsenförmig ausgestaltet ist, schliesst ein Boden 4 an, in den Öffnungen 5 eingeformt sind. Diese Öffnungen 5 können noch zusätzlich von einem nicht näher gezeigten Gitter überdeckt sein, damit kein Schmutz oder biologisches Material durch die Öffnungen 5 in das Innere der Fahrwalze 1.1 bzw. 1.2 gelangen kann.

Jeder Fahrwalze 1.1 bzw. 1.2 ist einer Nabe 6.1 bzw. 6.2 aufgeschoben, die jeweils einends auf einer Welle 7 aufsitzen. Die Achse 7 durchzieht im wesentlichen die Fahrwalze 1.1 und die Fahrwalze 1.2, wobei die Naben 6.1 und 6.2 um die Achse 7 drehen können. Hierzu sind jeweils Radnabenmotoren 8.1 und 8.2 vorgesehen, die beispielsweise auf der Achse 7 festliegen und bekannte Antriebselemente aufweisen, welche die Naben 6.1 und 6.2 um die Welle 7 drehen.

Der Antrieb der Radnabenmotoren 8.1 und 8.2 erfolgt über ein Hydroaggregat 9, das über entsprechende Leitungen, die nicht näher gekennzeichnet sind, die Radnabenmotoren 8.1 und 8.2 speist.

Im vorliegenden Ausführungsbeispiel besitzt das Hydroaggregat 9 drei Hydropumpen 10.1, 10.2 und 10.3 und steht über nicht näher gezeigte Leitungen mit einem Verteiler 11 und einem Hydrauliktank 12 in Verbindung. Beispielsweise speist die Pumpe 10.3 ein Arbeitsgerät, welches an einem Anschlussflansch 13 festgelegt werden kann, der wiederum mit der Achse 7 oder entsprechenden Chassisteilen in Verbindung steht. Die Pumpen 10.1 und 10.2 speisen die Radnabenmotoren 8.1 und 8.2.

Dem Hydroaggregat 9 ist wiederum innerhalb der Fahrwalze 1.1 ein Motor 14 zugeordnet, der beispielsweise ein Vier-Takt-Benzinmotor sein kann. Dieser treibt das Hydroaggregat an.

Die Abgase des Motors 14 werden durch einen Auspuff 15 in einen Spalt 16 zwischen den beiden Fahrwalzen 1.1 und 1.2 nach aussen geleitet, wobei ein Auspuffrohr 17 nach unten gerichtet ist.

Wesentlich bei der vorliegenden Erfindung ist, wie in Figur 2 gezeigt, dass alle Antriebselemente sich innerhalb der Fahrwalzen 1.1 und 1.2 sowie möglichst unterhalb der Achse 7 befinden. Sie können gegen den Walzenmantel 2 hin durch ein nur gestrichelt angedeutetes Abdeckblech 18 oder auch andere Chassisteile geschützt sein. Ferner wird der Spalt 16 bevorzugt durch ein Blech abgedeckt.

Mit ihren zueinander gerichteten Öffnungen 19.1 und 19.2 übergreifen die Fahrwalzen 1.1 und 1.2 jeweils einen Stützring 20.1 bzw. 20.2, der sich, nicht näher gezeigt, gegen die Achse 7 abstützt. In dem Stützring 20.1 bzw. 20.2 sind Rollenlager 21 vorgesehen, die, wie in Figur 1 angedeutet, geringfügig über den Stützring 20.1 bzw. 20.2 herausstehen, so dass sich die Fahrwalze 1.1 bzw. 1.2 auf diesen Rollenlagem 21 abrollen kann.

Zum Lenken und Steuern des erfindungsgemässen Fahrzeuges P₁ ist eine Führungseinrichtung 22 vorgesehen, die nicht näher beschrieben werden soll, da sie im wesentlichen aus einem Handgriff und Steuerungselementen für den Betrieb des Fahrzeuges P₁ besteht. Diese Fühningseinrichtung 22 ist auf beliebige Art und Weise mit dem Chassis bzw. der Achse 7 verbunden.

Die Funktionsweise des vorliegenden Fahrzeuges ist folgende:
An den Anschlussflansch 13 wird beispielsweise ein Mähbalken angeflanscht, mit dem ein Steilhang gemäht werden soll. Hierzu wird der Motor 14 in Gang gesetzt, der über das Hydroaggregat 9 die Hydropumpen 10.1, 10.2 und 10.3 antreibt. Da die Hydropumpen 10.1 und 10.2 separat steuerbar sind, kann durch Beschleunigen bzw. Abbremsen der jeweiligen Radnabenmotoren 8.1 und 8.2 das gesamte Fahrzeug P₁ gelenkt werden. Der Mähbalken wird über die Hydropumpe 10.3 angetrieben.

Beim Fahrbetrieb rollen die Fahrwalzen 1.1 und 1.2 mit den Naben 6.1 und 6.2 um die Achse 7, während sie im Bereich ihrer Öffnungen 19.1 und 19.2 den jeweiligen Stützring 20.1 und 20.2 abgestützt durch die Rollenlage 21 ablaufen.

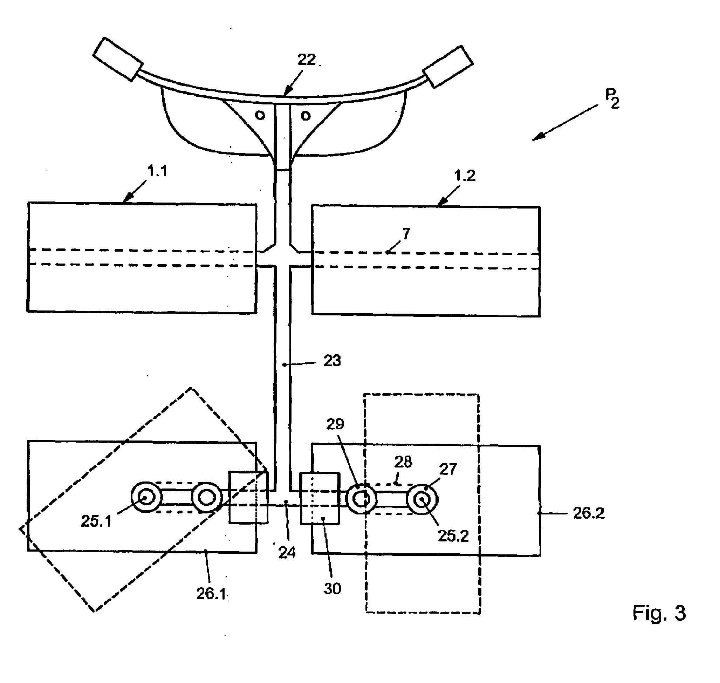

In Figur 3 ist ein weiteres Ausführungsbeispiel eines erfindungsgemässen Fahrzeuges P₂ gezeigt. Dieses wird durch die Führungseinrichtung 22 geführt, wobei die Führungseinrichtung 22 auch weggelassen werden kann, sofern es sich um ein ferngesteuertes Fahrzeug handelt.

An der Achse 7 sitzen die Fahrwalzen 1.1 und 1.2. Mit der Achse 7 ist Über eine Querachse 23 eine weitere Achse 24 verbunden, die etwa parallel zur Achse 7 verläuft. Die Achse 24 besitzt jeweils an ihren äusseren Enden eine Vertikalachse 25.1 und 25.2, um welche jeweils ein Rad 26.1 bzw. 26.2 drehen kann. Die Räder 26.1 bzw. 26.2 können ebenfalls als Walzen ausgebildet sein, vorzugsweise auch als Fahrwalzen ähnlich den Fahrwalzen 1.1 und 1.2.

Auf jeder Vertikalachse 25.1 und 25.2 sitzt ein Umlenkrad 27 auf, welches über eine Endloskette 28 mit einem Antriebsrad 29 gekoppelt ist. Dieses Antriebsrad 29 sitzt auch auf der Achse 24. Ferner ist ihm ein Antrieb 30, insbesondere ein Hydroantrieb zugeordnet. Über den Hydroantrieb 30 kann das Antriebsrad 29 und mit diesem über die Kette 28 das Umlenkrad 27 und die Vertikalachse 25 gedreht werden, so dass das Rad 26.1 bzw. 26.2 eine gewünschte Fahrstellung einnimmt. Die in Figur 3 gezeigte Fahrstellung wird dann angenommen, wenn das Fahrzeug P₂ auf der Stelle um die Fahrwalze 1.2 drehen soll. Die notwendige Einstellung der Räder 26.1 und 26.2 übernimmt eine Steuerung.

### Bezugszeichenliste

| | | | | | |
|---|---|---|---|---|---|
| 1 | Fahrwalze | 34 | | 67 | |
| 2 | Walzenmantel | 35 | | 68 | |
| 3 | Vorsprung | 36 | | 69 | |
| 4 | Boden | 37 | | 70 | |
| 5 | Öffnung | 38 | | 71 | |
| 6 | Nabe | 39 | | 72 | |
| 7 | Achse | 40 | | 73 | |
| 8 | Radnabenmotor | 41 | | 74 | |
| 9 | Hydroaggregat | 42 | | 75 | |
| 10 | Hydropumpe | 43 | | 76 | |
| 11 | Verteiler | 44 | | 77 | |
| 12 | Hydrauliktank | 45 | | 78 | |
| 13 | Anschlussflansch | 46 | | 79 | |
| 14 | Motor | 47 | | | |
| 15 | Auspuff | 48 | | | |
| 16 | Spalt | 49 | | | |
| 17 | Aussenrohr | 50 | | | |
| 18 | Abdeckblech | 51 | | | |
| 19 | Öffnung | 52 | | | |
| 20 | Stützring | 53 | | | |
| 21 | Rollenlager | 54 | | | |
| 22 | Führungseinrichtung | 55 | | | |
| 23 | Querachse | 56 | | | |
| 24 | weitere Achse | 57 | | P | Fahrzeug |
| 25 | Vertikalachse | 58 | | | |
| 26 | Rad | 59 | | | |
| 27 | Umlenkrad | 60 | | | |
| 28 | Endloskette | 61 | | | |
| 29 | Antriebsrad | 62 | | | |
| 30 | Antrieb | 63 | | | |
| 31 | | 64 | | | |
| 32 | | 65 | | | |
| 33 | | 66 | | | |

## Patentansprüche

1. Fahrzeug mit einem Antrieb (8.1, 8.2, 9, 14) für zumindest eine Fahrwalze (1.1, 1.2) mit einem Walzenmantel (2) auf dessen Oberfläche sich Vorsprünge (3) befinden, wobei der Antrieb (8.1, 8.2, 9, 14) in der Fahrwalze (1.1, 1.2) angeordnet ist,
**dadurch gekennzeichnet,**
**dass** ein Zusatzantrieb (10.3) für eine an das Fahrzeug (P₁) angebaute Arbeitsgerätschaft in der Fahrwalze (1.1, 1.2) angeordnet ist.

2. Fahrzeug nach Anspruch 1, **dadurch gekennzeichnet, dass** die Fahrwalze (1.1, 1.2) auf zumindest einer Nabe (6.1, 6.2) und diese auf einer Achse (7) sitzt.

3. Fahrzeug nach Anspruch 2 **dadurch gekennzeichnet, dass** der Antrieb (8.1, 8.2, 9, 14) und/oder Zusatzantrieb (10.3) unterhalb der Achse (7) angeordnet sind.

4. Fahrzeug nach einem der Ansprüche 1 bis 3 **dadurch gekennzeichnet, dass** der Antrieb (8.1, 8.2, 9. 14) und/oder Zusatzantrieb (10.3) durch ein Abdeckblech (18) von der Fahrwalze (1.1, 1.2) getrennt sind.

5. Fahrzeug nach wenigstens einem der Ansprüche 1 bis 4 **dadurch gekennzeichnet, dass** der Antrieb ein Radnabenmotor (8.1, 8.2) und ein Hydroaggregat (9) aufweist.

6. Fahrzeug nach wenigstens einem der Ansprüche 1 bis 5 **dadurch gekennzeichnet, dass** der Zusatzantrieb eine Hydraulikpumpe (10.3) ist.

7. Fahrzeug nach Anspruch 5 oder 6, **dadurch gekennzeichnet, dass** dem Antrieb (9) und/oder dem Zusatzantrieb (10.3) ein kraftstoffbetriebener Motor (14) zugeordnet ist.

8. Fahrzeug nach Anspruch 7, **dadurch gekennzeichnet, dass** sich der Motor (14) ebenfalls in der Fahrwalze (1.1, 1.2) befindet.

9. Fahrzeug nach Anspruch 7 oder 8, **dadurch gekennzeichnet, dass** die Fahrwalze (1.1, 1.2) bevorzugt seitliche Öffnungen (5) zum Ansaugen von Luft für den Motor (14) aufweist.

10. Fahrzeug nach Anspruch 9, **dadurch gekennzeichnet, dass** die Öffnungen (5) mit einem Gitter überdeckt sind.

11. Fahrzeug nach wenigstens einem der Ansprüche 1 bis 10, **dadurch gekennzeichnet, dass** eine Achse (7) beidseits Naben (6.1, 6.2) aufweist, wobei auf jede Nabe (6.1, 6.2) eine Fahrwalze (1.1, 1.2) aufgeschoben ist.

12. Fahrzeug nach Anspruch 11, **dadurch gekennzeichnet, dass** jeder Nabe (6.1, 6.2) ein eigener ansteuerbarer Antrieb (8.1, 8.2) zugeordnet ist.

13. Fahrzeug nach Anspruch 11 oder 12, **dadurch gekennzeichnet, dass** jede Fahrwalze (1.1, 1.2) gegenüber der Nabe (6.1, 6.2) eine Öffnung (19.1, 19.2) aufweist, wobei die Öffnungen (19.1, 19.2) der beiden Fahrwalzen (1.1, 1.2) sich gegenüberliegen.

14. Fahrzeug nach Anspruch 13, **dadurch gekennzeichnet, dass** in der Öffnung (19.1, 19.2) der Fahrwalze (1.1, 1.2) ein Stützring (20.1, 20.2) sitzt, der sich und damit auch die Fahrwalze (1.1, 1.2) gegenüber der Achse (7) abstützt.

15. Fahrzeug nach Anspruch 14, **dadurch gekennzeichnet, dass** der Stützring (20.1, 20.2) mit Lagerelementen (21) belegt ist, welche von der hülsenförmigen Fahrwalze (1.1, 1.2) übergriffen sind.

16. Fahrzeug nach wenigstens einem der Ansprüche 11 bis 15, **dadurch gekennzeichnet, dass** die Fahrwalzen (1.1, 1.2) einen Abstand (16) voneinander einhalten.

17. Fahrzeug nach Anspruch 16, **dadurch gekennzeichnet, dass** in dem Abstand (16) ein Auspuff (15) für den Motor (14) sitzt, wobei der Auspuff (15) nach unten ausbläst.

18. Fahrzeug nach Anspruch 16 oder 17, **dadurch gekennzeichnet, dass** aus dem Abstand (16) ein an der Achse festgelegter Flansch (13) zum Anbringen einer Arbeitsgerätschaft herausragt.

19. Fahrzeug nach einem der Ansprüche 16 bis 18, **dadurch gekennzeichnet, dass** aus dem Abstand (16) eine mit der Achse (7) verbundene Führungseinrichtung (22) herausragt.

20. Fahrzeug nach wenigstens einem der Ansprüche 11 bis 19, **dadurch gekennzeichnet, dass** der Achse (7) eine zweite Achse (24) mit zwei um jeweils eine vertikale Achse (25.1, 25.2) drehbaren Rädern (26.1, 26.2) zugeordnet ist.

21. Fahrzeug nach Anspruch 20, **dadurch gekennzeichnet**, das die Räder (26.1, 26.2) ebenfalls als Fahrwalzen mit Vorsprüngen ausgebildet sind.

22. Fahrzeug nach wenigstens einem der Ansprüche 1 bis 21, **dadurch gekennzeichnet, dass** Antrieb (8.1, 8.2, 9), Zusatzantrieb (10.3) und/oder ggf. Motor (14) ferngesteuert, beispielsweise über GPS, sind.

## Claims

1. A vehicle with a drive (8.1, 8.2, 9, 14) for at least one driven roller (1.1, 1.2) with a roller shell (2), on the surface of which are located projections (3), the drive (8.1, 8.2, 9, 14) being arranged in the driven roller (1.1, 1.2),
**characterised in that**
an auxiliary drive (10.3) for an implement attached to the vehicle (P₁) is arranged in the driven roller (1.1, 1.2).

2. A vehicle according to Claim 1, **characterised in that** the driven roller (1.1, 1.2) is seated on at least one hub (6.1, 6.2), and this is seated on an axle (7).

3. A vehicle according to Claim 2, **characterised in that** the drive (8.1, 8.2, 9, 14) and/or auxiliary drive (10.3) are located beneath the axle (7).

4. A vehicle according to one of Claims 1 to 3, **characterised in that** the drive (8.1, 8.2, 9, 14) and/or auxiliary drive (10.3) is/are separated from the driven roller (1.1, 1.2) by a cover plate (18).

5. A vehicle according to at least one of Claims 1 to 4, **characterised in that** the drive has a wheel-hub motor (8.1, 8.2) and a hydraulic unit (9).

6. A vehicle according to at least one of Claims 1 to 5, **characterised in that** the auxiliary drive is a hydraulic pump (10.3).

7. A vehicle according to Claim 5 or 6, **characterised in that** a fuel-operated engine (14) is associated with the drive (9) and/or the auxiliary drive (10.3).

8. A vehicle according to Claim 7, **characterised in that** the engine (14) is likewise located in the driven roller (1.1, 1.2).

9. A vehicle according to Claim 7 or 8, **characterised in that** the driven roller (1.1, 1.2) preferably has lateral openings (5) for drawing in air for the engine (14).

10. A vehicle according to Claim 9, **characterised in that** the openings (5) are covered with a grille.

11. A vehicle according to at least one of Claims 1 to 10, **characterised in that** an axle (7) has hubs (6.1, 6.2) on both sides, with a driven roller (1.1, 1.2) being pushed on to each hub (6.1, 6.2).

12. A vehicle according to Claim 11, **characterised in that** an individual controllable drive (8.1, 8.2) is associated with each hub (6.1, 6.2).

13. A vehicle according to Claim 11 or Claim 12, **characterised in that** each driven roller (1.1, 1.2) has an opening (19.1, 19.2) opposite the hub (6.1, 6.2), the openings (19.1, 19.2) of the two driven rollers (1.1, 1.2) lying opposite one another.

14. A vehicle according to Claim 13, **characterised in that** a supporting ring (20.1, 20.2) is seated in the opening (19.1, 19.2) of the driven roller (1.1, 1,2), which ring supports itself and hence also the driven roller (1.1, 1.2) relative to the axis (7).

15. A vehicle according to Claim 14, **characterised in that** the supporting ring (20.1, 20.2) is equipped with bearing elements (21) over which extend the sleeve-shaped driven roller (1.1, 1.2).

16. A vehicle according to at least one of Claims 11 to 15, **characterised in that** the driven rollers (1.1, 1.2) maintain a gap (16) from each other.

17. A vehicle according to Claim 16, **characterised in that** an exhaust (15) for the engine (14) is located in the gap (16), the exhaust (15) being ejected downwards.

18. A vehicle according to Claim 16 or 17, **characterised in that** a flange (13) which is fixed on the axle for attaching an implement projects out of the gap (16).

19. A vehicle according to one of Claims 16 to 18, **characterised in that** a guide means (22) connected to the axle (7) projects out of the gap (16).

20. A vehicle according to at least one of Claims 11 to 19, **characterised in that** a second axle (24) with two wheels (26.1, 26.2) which can be turned about one vertical axle (25.1, 25.2) in each case is associated with the axle (7).

21. A vehicle according to Claim 20, **characterised in that** the wheels (26.1, 26.2) are likewise formed as driven rollers with projections.

22. A vehicle according to at least one of Claims 1 to 21, **characterised in that** the drive (8.1, 8.2, 9), auxiliary drive (10.3) and/or optionally engine (14) are remote-controlled, for example via GPS.

## Revendications

1. Véhicule avec un entraînement (8.1, 8.2, 9, 14) pour au moins un cylindre de conduite (1.1, 1.2) avec une enveloppe de cylindre (2) sur la surface de laquelle se trouvent des saillies (3), l'entraînement (8.1, 8.2, 9, 14) étant disposé dans le cylindre de conduite (1.1, 1.2),
**caractérisé par le fait**
**qu'**un entraînement additionnel (10.3) pour un ensemble d'outils de travail annexé au véhicule (P₁) est disposé dans le cylindre de conduite (1.1, 1.2).

2. Véhicule selon la revendication 1, **caractérisé par le fait que** le cylindre de conduite (1.1, 1.2) se trouve sur au moins un moyeu (6.1, 6.2) et ce dernier sur un essieu (7).

3. Véhicule selon la revendication 2, **caractérisé par le fait que** l'entraînement (8.1, 8.2, 9, 14) et/ou l'entraînement additionnel (10.3) sont disposés au-dessous de l'essieu (7).

4. Véhicule selon l'une des revendications 1 à 3, **caractérisé par le fait que** l'entraînement (8.1, 8.2, 9, 14) et/ou l'entraînement additionnel (10.3) sont séparés du cylindre de conduite (1.1, 1.2) par une tôle de protection (18).

5. Véhicule selon au moins l'une des revendications 1 à 4, **caractérisé par le fait que** l'entraînement présente un moteur à moyeu de roue (8.1, 8.2) et un ensemble hydraulique (9).

6. Véhicule selon au moins l'une des revendications 1 à 5, **caractérisé par le fait que** l'entraînement additionnel est une pompe hydraulique (10.3).

7. Véhicule selon la revendication 5 ou 6, **caractérisé par le fait qu'**à l'entraînement (9) et/ou à l'entraînement additionnel (10.3) est associé un moteur à carburant (14).

8. Véhicule selon la revendication 7, **caractérisé par le fait que** le moteur (14) se situe également dans le cylindre de conduite (1.1, 1.2).

9. Véhicule selon la revendication 7 ou 8, **caractérisé par le fait que** le cylindre de conduite (1.1, 1.2) présente, de préférence, des ouvertures latérales (5) pour l'aspiration d'air pour le moteur (14).

10. Véhicule selon la revendication 9, **caractérisé par le fait que** les ouvertures (5) sont recouvertes d'une grille.

11. Véhicule selon au moins l'une des revendications 1 à 10, **caractérisé par le fait qu'**un essieu (7) présente, des deux côtés, des moyeux (6.1, 6.2), sur chaque moyeu (6.1, 6.2) étant enfilé un cylindre de conduite (1.1, 1.2).

12. Véhicule selon la revendication 11, **caractérisé par le fait qu'**à chaque moyeu (6.1, 6.2) est associé un entraînement propre activable (8.1, 8.2).

13. Véhicule selon la revendication 11 ou 12, **caractérisé par le fait que** chaque cylindre de conduite (1.1, 1.2) présente, face au moyeu (6.1, 6.2), une ouverture (19.1, 19.2), les ouvertures (19.1, 19.2) des deux cylindres de conduite (1.1, 1.2) étant opposées l'une à l'autre.

14. Véhicule selon la revendication 13, **caractérisé par le fait que** dans l'ouverture (19.1, 19.2) du cylindre de conduite (1.1, 1.2) se trouve une bague d'appui (20.1, 20.2) qui s'appuie, et de ce fait aussi le cylindre de conduite (1.1, 1.2), contre l'essieu (7).

15. Véhicule selon la revendication 14, **caractérisé par le fait que** la bague d'appui (20.1, 20.2) est équipée d'éléments de montage (21) par-dessus lesquels vient en prise le cylindre de conduite en forme de manchon (1.1, 1.2).

16. Véhicule selon au moins l'une des revendications 11 à 15, **caractérisé par le fait que** les cylindres de conduite (1.1, 1.2) maintiennent une distance (16) entre eux.

17. Véhicule selon la revendication 16, **caractérisé par le fait que** sur la distance (16) se trouve un échappement (15) du moteur (14), l'échappement (15) rejetant vers le bas.

18. Véhicule selon la revendication 16 ou 17, **caractérisé par le fait que** de la distance (16) ressort une bride (13), fixée à l'essieu, destinée à y raccorder un ensemble d'outils de travail.

19. Véhicule selon l'une des revendications 16 à 18, **caractérisé par le fait que** de la distance (16) ressort un dispositif de guidage (22) connecté à l'essieu (7).

20. Véhicule selon au moins l'une des revendications 11 à 19, **caractérisé par le fait qu'**à l'essieu (7) est associé un deuxième essieu (24) avec deux roues (26.1, 26.2) pouvant tourner, chacune, autour d'un axe vertical (25.1, 25.2).

21. Véhicule selon la revendication 20, **caractérisé par le fait que** les roues (26.1, 26.2) sont également réalisées sous forme de cylindres de conduite avec des saillies.

22. Véhicule selon au moins l'une des revendications 1 à 21, **caractérisé par le fait que** l'entraînement (8.1, 8.2, 9), l'entraînement additionnel (10.3) et/ou éventuellement le moteur (14) sont commandés à distance, par exemple par GPS.
